# EUROPÄISCHE PATENTANMELDUNG

(11) **EP 1 701 266 A1**
(43) Veröffentlichungstag der Anmeldung: **13.09.2006**
(21) Anmeldenummer: 05005288.5
(22) Anmeldetag: 10.03.2005
(51) Int. Cl.: G06F 11/36

(54) **Testvorrichtung zur Überprüfung einer Stapelverarbeitung**

(71) Anmelder: HORIZONT RZ-Organisations- und Software-Entwicklungs GmbH, 80339 München (DE)
(72) Erfinder: Griessbach, Roland, 31275 Lehrte (DE); Hahm, Uwe, 85764 Unterschleissheim (DE)
(74) Vertreter: Rupprecht, Kay

(57) **Zusammenfassung**

Es wird eine Testvorrichtung (1) und ein entsprechendes Verfahren zur Überprüfung einer Stapelverarbeitung in einer Datenverarbeitungsanlage (2) angegeben, mit einer ersten Scheduling-Einrichtung (3) zur Steuerung der Stapelverarbeitung, wobei die erste Scheduling-Einrichtung (3) dafür ausgebildet ist, über eine erste Skriptschnittstelle (4) Skripte aus einer Skriptbibliothek (5) auszuführen, um somit Arbeitsvorgänge nachgeordneter Einrichtungen eines Betriebes auszuführen oder zu steuern. Mit dem Ziel, eine Überprüfung der Stapelverarbeitung zu ermöglichen, welche die Performance des überprüften Systems nicht beeinträchtigt, ist eine zweite Scheduling-Einrichtung (7) dafür ausgebildet, über eine von der ersten Skriptschnittstelle (3) unabhängige zweite Skriptschnittstelle (8) die Ausführung von Skripten aus der Skriptbibliothek (5) zu simulieren und Ergebnisdaten der Simulation an die Testvorrichtung (1) zurückzugeben.

## Beschreibung

Die Erfindung betrifft eine Testvorrichtung sowie ein Testverfahren zur Überprüfung einer Stapelverarbeitung nach den Oberbegriffen von Anspruch 1 bzw. Anspruch 10.

In den meisten, vor allem größeren Betrieben werden üblicherweise gemeinsam genutzte Rechnerressourcen nicht unmittelbar zur Verfügung gestellt, sondern die abzuarbeitenden Aufgaben werden gesammelt und nach bestimmten Zeit- oder Prioritätskriterien abgearbeitet. Dazu werden die abzuarbeitenden Aufgaben - im folgenden: Jobs - gesammelt und in einer Stapel- oder Batch-Verarbeitung in der durch die genannten Kriterien zu ermittelnden Reihenfolge abgearbeitet.

Eine bekannte Steuersprache für Batch-Verarbeitungen in einem Großrechnerumfeld ist die Job Control Language (JCL). Sie wurde ursprünglich bereits 1964 für das Betriebssystem MVS, später OS/360 entwickelt und findet heute noch auf Systemen unter z/OS Verwendung. In der IBM-Mainframe-Welt ist demnach die typische Job- oder Skriptsprache JCL. Im dezentralen Systemumfeld (Windows, Unix, Linux) werden verschiedenste Skriptsprachen eingesetzt.

Der folgende kleine Codeschnipsel illustriert einen Programmaufruf in JCL:

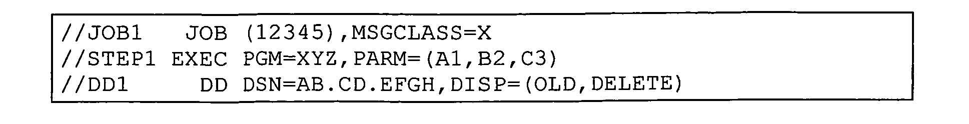

Hier werden dem Programm XYZ beim Aufruf Parameter A1, B2 und C3 übergeben. Das Programm XYZ verwendet die existierende ("OLD") Datei AB.CD.EFGH und löscht diese ("DELETE") nach dem Programmende.

Damit die Batch-Jobs in der gewünschten Reihenfolge abgearbeitet werden, muss das System natürlich zur Planung und Steuerung der Batchverarbeitung in der Lage sein. Das dafür verantwortliche System nennt man Schedulingsystem. Dessen Ziel ist die Automatisierung von Planung, Durchführung und Kontrolle der gesamten Batch-Produktion in einem Rechenzentrum unter Berücksichtigung und möglichst optimaler Ausnutzung der vorhandenen Ressourcen. In einem Rechenzentrum plant und steuert ein Schedulingsystem viele tausend Prozesse, Skripte bzw. Jobs.

In einem Schedulingsystem werden die Jobs durch Abhängigkeiten in einer bestimmten Reihenfolge abgearbeitet, also gestartet und auf ihre erfolgreiche Ausführung hin geprüft. Jobs sind häufig voneinander abhängig, beispielsweise darf Job B erst nach dem Ende von Job A starten. Darüber hinaus gibt es noch weitere Abhängigkeitstypen, wie Startzeiten, Ressourcensteuerung oder Condition-Code-Steuerung.

Zum Start mancher Schedulingsysteme ist ein Eintrag in einer Betriebssystemtabelle notwendig. Betriebssystemtabellen, in die u. a. Subsystemnamen eingetragen werden, sind sehr systemnah organisiert.

Einige Schedulingsysteme lassen sich nur als Started Task starten. Dazu ist ein Eintrag in einer Started-Task-Tabelle notwendig. Eine Started-Task entspricht einer Systemprozedur, welche gestartet wird und aktiv bleibt, solange kein Stop-Kommando abgegeben wird. Started-Task-Tabellen sind sehr systemnah organisiert.

In der Regel werden zum Starten/Stoppen einer Started-Task, zum Betrieb und zum Aufbau/Anlegen von Dateien sowie zum Ausführen von Funktionen innerhalb des Schedulingsystems entsprechende Berechtigungen benötigt, welche im Security-System (z.B. RACF) abgelegt werden.

Beispiele bekannter Schedulingsysteme sind der Tivoli Workload Scheduler (TWS) von IBM, CA-7 von CA oder CONTROL-M von BMC. Für die Zusammenarbeit mit dem Schedulingsystem kann JCL variabel genutzt werden, da es neben JCL-Prozedurvariablen, welche beim Einsatz von JCL-Prozeduren verwendet werden können, auch Scheduling-Variablen kennt, welche vom Schedulingsystem vor dem Start eines Jobs aufgelöst bzw. ersetzt werden können. Dies soll noch einmal anhand des modifizierten Codeschnipsels von oben beispielhaft erklärt werden:

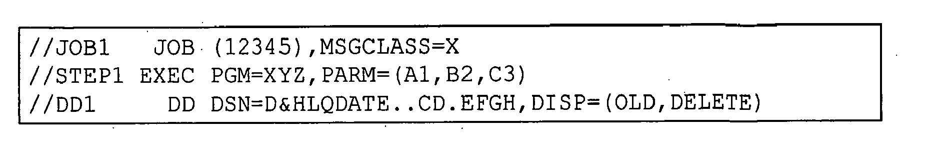

Der String &HLQDATE ist eine solche Scheduling-Variable. Das Schedulingsystem kennt den Wert der Scheduling-Variable und ersetzt den String &HLQDATE, in diesem Fall etwa durch das aktuelle Tagesdatum. Das Ergebnis ist wäre dann nach Auflösung von &HLQDATE am 28.02.05:

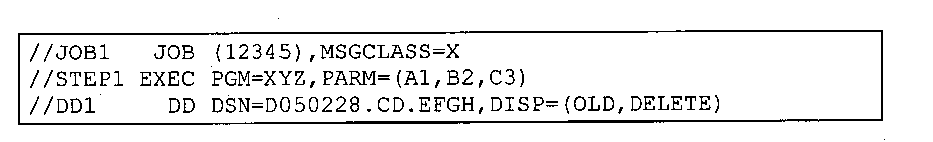

Die JCL ist dabei gewöhnlich in eigenen sogenannten Job-Bibliotheken oder JCL-Libraries abgelegt. Das Schedulingsystem liest diese JCL-Libraries zum Start eines Jobs.

Der korrekte Ablauf der Stapelverarbeitung ist für jeden Betrieb extrem wichtig, da es bei Fehlern im Produktivsystem schlimmstenfalls zum Stillstand der Produktion kommen kann. Um diese Gefahr auszuschließen oder zumindest zu verringern, ist es möglich, die Jobs vor ihrem "realen" Einsatz zu prüfen. Ein Programm, das dies leistet, ist ein sogenannter JCL-Checker. Primär wird dabei auf korrekte Schreibweise in JCL geprüft, also eine Syntaxprüfung vorgenommen. Darüber hinaus können manche JCL-Checker aber auch weitere Prüfungen vornehmen, etwa ob das aufzurufende Programm überhaupt existiert, ob die notwendigen Dateien verfügbar sind, ob Steuerkartenanweisungen oder Programmparameter korrekt sind.

Manche Schedulingsysteme haben zur Unterstützung einer solchen Prüfung eine interne Simulationsfunktion, mit der JCL-Skripte simuliert werden können. Die Simulationsfunktion stellt dann üblicherweise eine offizielle Schnittstelle für externe Programme zur Verfügung. Dabei kann das externe Programm dem Schedulingsystem mitteilen, für welchen Job und zu welchem Ausführungszeitpunkt simuliert werden soll, und es bekommt.als Ergebnis die aufgelöste JCL zurück.

Im Produktions- oder Produktivsystem ist ein (sind manchmal auch mehrere) Schedulingsystem(e) im Einsatz, man spricht hier vom produktiven Schedulingsystem. Oftmals werden auch auf den Test- und/oder Entwicklungssystemen eigene Schedulingsysteme eingesetzt, die dann entsprechend Test-Schedulingsysteme genannt werden.

Jedes Schedulingsystem selbst muss unabhängig voneinander installiert und implementiert werden. Dabei werden in der Regel viele Dateien angelegt, welche zum Betrieb des Schedulingsystems benötigt werden. Mittels Parameterdateien können dem Schedulingsystem spezifische Laufangaben mitgegeben werden.

In einem Schedulingsystem werden alle Attribute zu einem Job in eigenen Definitionsdateien gespeichert. I.d.R. haben die Schedulingsysteme eine weitere Datei/Datenbank, in der alle auszuführenden/ausgeführten Jobs aufgeführt sind - diese Datei wird oft mit Tagesplan oder aktives File bezeichnet. Ein Schedulingsystem verwendet zum Erstellen des Tagesplans aus den Daten der Definitionsdateien eigene Abläufe - häufig sind dies auch Jobs, welche vom Schedulingsystem selbst oder vom Anwender dynamisch erstellt werden können.

Als Maßstab für den Umfang, den ein Schedulingsystem bewältigen muss, sei angeführt, dass in einem produktiven Schedulingsystem eines großen Rechenzentrums täglich zwischen 50.000 bis 100.000 Jobs ausgeführt werden, wobei natürlich viele Millionen Dateien verarbeitet werden müssen.

Das folgende Beispielszenario beschreibt den Ablauf beispielhaft für das Schedulingsystem TWS z/OS (früher OPC).

TWS besitzt eine interne JCL-Simulationsfunktion namens JCLPREPA. Mit dieser Simulationsfunktion können einzelne Jobs simuliert werden. Der von der Anmelderin HORIZONT vertriebene JCL-Checker SmartJCL benutzt diese JCL-Simulationsfunktion zum Simulieren einzelner Jobs beispielsweise in einem Benutzerdialog. Der HORIZONT-JCL-Checker kann jedoch auch zum Simulieren vieler Jobs (= Massensimulation) verwendet werden.

Bei der herkömmlichen Massensimulation tritt jedoch ein massives Performance-Problem auf. Anwender, welche während eines Simulationslaufes auf die Job-Bibliotheken zugreifen wollen, etwa zur Pflege der JCL-Skripte über den Dialog von TWS z/OS, werden in den Hintergrund gedrängt und müssen lange auf den Zugriff der JCL warten bzw. können sogar in manchen Situationen gar nicht darauf zugreifen. Da ein Massensimulationslauf, bei dem für eine Vielzahl von Jobs nacheinander die JCL-Simulationsfunktion aufgerufen wird, mehrere Stunden dauern kann, führt dies zu einer nicht tolerierbaren Beeinträchtigung der Anwender. Gravierend kommt noch hinzu, dass auch das Schedulingsystem TWS z/OS selbst beim JCL-Zugriff ausgebremst wird und dementsprechende Fehlermeldungen ausgibt. Ein derartiger negativer Einfluss auf das produktive Schedulingsystem kann für die Produktion äußerst gefährlich werden und muss deshalb verhindert werden.

Daher ist Aufgabe der Erfindung, eine Überprüfung der Stapelverarbeitung zu ermöglichen, welche die Performance des überprüften Systems nicht beeinträchtigt.

Diese Aufgabe wird durch eine Testvorrichtung gemäß Anspruch 1 sowie durch ein Testverfahren gemäß Anspruch 10 gelöst. Dabei kann durch den Einsatz einer zweiten Scheduling-Einrichtung das produktive Schedulingsystem entlastet werden, so dass es durch die Massensimulation keine Performanceeinbussen erleidet.

Um diese Lösung aufzufinden, hatten die Erfinder zunächst herauszufinden, an welcher Stelle der Performanceeinbruch hauptsächlich verursacht wird. Dabei kamen sie zu dem Ergebnis, dass zumindest das Schedulingsystem TWS z/OS einen internen Engpass beim Zugriff auf die Job-Bibliotheken hat, auf den das Schedulingsystem selbst, aber auch die Anwender angewiesen sind. Die Erfinder wurden auf dieser Erkenntnis basierend von der Idee geleitet, die Kapazität dieses Bibliotheks-Zugriffs zu erweitern. Als Möglichkeit hierfür erkannten sie eine Erweiterung der Schnittstelle zwischen TWS z/OS und der Job-Bibliothek, die sie auf eine besonders elegante und einfache Weise realisieren, indem ein weiteres Schedulingsystem mit eigener, demnach unabhängiger Schnittstelle eingesetzt wird.

Vorteilhafterweise ist die zweite Scheduling-Einrichtung mit ihrer zweiten Skriptschnittstelle Teil der Datenverarbeitungsanlage. Somit wird keine zusätzliche Hardware benötigt, und der Test ist besonders realitätsnah.

Noch vorteilhafterweise ist die zweite Scheduling-Einrichtung eine zweite Instanz der ersten Scheduling-Einrichtung, und Definitionsdateien der ersten Scheduling-Einrichtung sind für die zweite Scheduling-Einrichtung kopiert. Damit stimmen auf einfache Weise die Scheduling-Umgebungen der zweiten Scheduling-Einrichtung mit der produktiven ersten Scheduling-Einrichtung überein, und die zweite Scheduling-Einrichtung ist mit minimalem Aufwand realisierbar.

Bevorzugt weist die zweite Scheduling-Einrichtung eine temporäre Schedulingsystem-Umgebung auf, welche die kopierten Definitionsdateien sowie weitere Parameter umfasst, und die Testvorrichtung ist dafür ausgebildet, die zweite Scheduling-Einrichtung mit ihrer Schedulingsystem-Umgebung zu Beginn einer Simulation auf- und nach deren Beendigung wieder abzubauen. Es wird also eine eigene temporäre Schedulingsystem-Umgebung aufgebaut, für die Simulation der JCL benutzt und nachher wieder gelöscht, woraufhin die simulierte JCL geprüft werden kann. Damit wird der Test sehr einfach realisiert und verschwindet gleichzeitig sofort nach Beendigung vollständig aus dem Produktivsystem.

In einer bevorzugten Ausführungsform ist die Datenverarbeitungsanlage ein IBM-Mainframerechner, die erste und zweite Scheduling-Einrichtung ein TWS-System und die Steuersprache für die Stapelverarbeitung JCL. Wie oben beschrieben, handelt es sich hierbei um eine wesentliche und häufig verwendete Architektur besonders bei großen Systemen, für welche die Simulation besonders wichtig und gleichzeitig wegen ihres Umfangs auch besonders anfällig für das mit der Erfindung gelöste Performanceproblem der herkömmlichen Testmöglichkeiten ist.

Vorteilhafterweise ist hierbei für die zweite Scheduling-Einrichtung ein Eintrag in einer Subsystemtabelle sowie einer Started-Task-Tabelle des Betriebssystems des IBM-Mainframerechners vorgenommen. TWS z/OS beispielsweise benötigt als Systemvoraussetzung einen Eintrag in der Subsystemtabelle sowie der Started-Task-Tabelle des Betriebsystems.

Noch vorteilhafterweise sind hierbei für die zweite Scheduling-Einrichtung die Einträge im Security-System des Betriebssystems des IBM-Mainframerechners vorgenommen. TWS z/OS beispielsweise bietet optional als Sicherheitskonzept Schnittstellen zum Security-System des Betriebsystems.

In einer besonders bevorzugten Ausführungsform ist eine Sortiereinrichtung vorgesehen, die dafür ausgebildet ist, zu Beginn der Simulation eine Liste aller auszuführender Arbeitsvorgänge der Stapelverarbeitung zu empfangen und nach ihrer Ausführungszeit zu sortieren. Damit kann in der korrekten zeitlichen Reihenfolge geprüft werden

Vorteilhafterweise hält die Testvorrichtung eine Liste aller aktuellen Dateien des Systems bereit, ergänzt durch in Arbeitsvorgänge der Stapelverarbeitung angelegten, gelöschten, geänderten oder gelesenen Dateien. In einem solchen Dateikatalog werden wichtige Informationen zur Überprüfung bereitgestellt.

In vorteilhafter Weiterbildung ist eine Prüfeinrichtung vorgesehen, welche dafür ausgelegt ist, für diejenigen Arbeitsvorgänge, die einen Dateizugriff vorsehen, zu überprüfen, ob eine gemäß der per Sortierung ermittelten Ausführungsreihenfolge anzulegende Datei bereits angelegt oder eine benötigte Datei nicht vorhanden ist, und zutreffendenfalls einen Warnhinweis auszugeben. Dies kann auf wertvolle Fehlerinformationen aufmerksam machen, da ein Job natürlich kaum fehlerfrei arbeiten kann, wenn er nicht die erwartete Dateistruktur vorfindet oder hinterlässt.

Entsprechende Weiterbildungen des erfindungsgemäßen Verfahrens, wie sie in den weiteren Unteransprüchen angegeben sind, haben analoge Vorteile.

Die Erfindung wird nachstehend, auch hinsichtlich weiterer Merkmale und Vorteile, anhand eines Ausführungsbeispiels und unter Bezugnahme auf die beigefügten Zeichnungen näher erläutert. Die Zeichnungen zeigen in:
- Fig. 1: eine erfindungsgemäße Anordnung einer Testvorrichtung in einer Datenverarbeitungsanlage mit Scheduler-System und
- Fig. 2: einen Detaillausschnitt gemäß Figur 1 zur Erläuterung der Abhängigkeiten von Jobs und der notwendigen Kommunikation zwischen Testvorrichtung und Schedulingsystem.

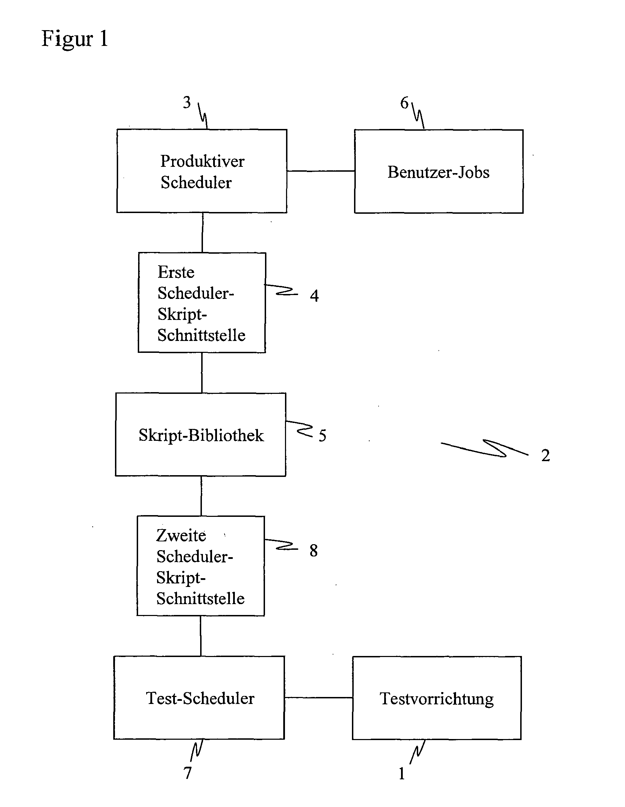

Figur 1 zeigt eine erfindungsgemäße Anordnung einer Testvorrichtung 1 in einer Datenverarbeitungsanlage 2 mit einer produktiven ersten Scheduling-Einrichtung 3. Die erste Scheduling-Einrichtung greift über eine erste Scheduler-Skript-Schnittstelle 4 auf eine Skript-Bibliothek 5 zu, um die zu planenden und zu steuernden Jobs einer Stapelverarbeitung auszuführen. Gleichzeitig empfängt die erste Scheduling-Einrichtung 3 Benutzer-Jobs 6, die etwa über eine übliche Benutzerschnittstelle von Anwendern angefordert werden. Ein Grund hierfür kann die Pflege und Erstellung von Job-Skripten in der Skript-Bibliothek 5 sein, es kann aber auch einfach nur die Ausführung zu einem von der Wartung der Scheduling-Einrichtung 3 unabhängigen Aufgabe betreffen. Das Anwendungsfeld der Aufgaben, die durch Ausführung eines Skripts ausgeführt werden, ist sehr breit und betrifft nachgeordnete Einrichtungen. Dies könnte beispielsweise die Regelung von Produktionsprozessen in nachgeordneten Einrichtungen sein. Plastisches Beispiel wäre die Steuerung einer Roboterstraße oder das Einfüllen von Komponenten entsprechend einer Rezeptur. Daneben können natürlich interne Abläufe betroffen sein, etwa ein Job, der den JCL-Check selbst startet.

Damit die Performance der produktiven ersten Scheduling-Einrichtung 1 nicht leidet, ist eine zweite Test-Scheduling-Einrichtung 7 vorgesehen, die über eine eigene zweite Scheduler-Skript-Schnittstelle 8 auf die Skript-Bibliothek 5 zugreift. Damit wird wirksam verhindert, dass Engpässe der ersten Scheduling-Einrichtung 3 oder ihrer Schnittstelle 4 auftreten, wenn die Testvorrichtung 1 eine Massensimulation startet, um die Stapelverarbeitung zu überprüfen.

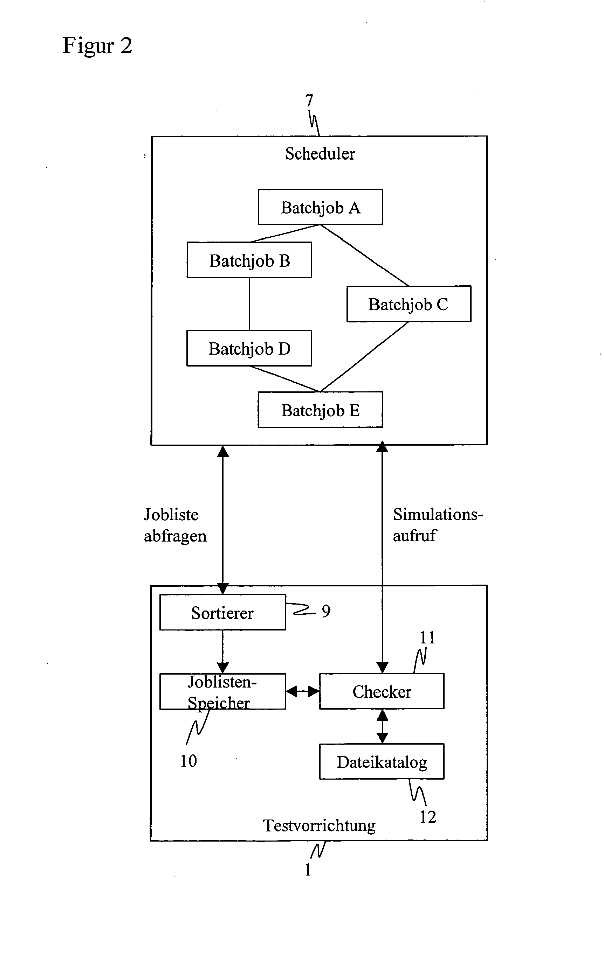

In Figur 2 ist die Kommunikation zwischen der Testvorrichtung 1 und der Scheduling-Einrichtung 7 zur Erläuterung der Abhängigkeiten von Jobs und der notwendigen Kommunikation zwischen Testvorrichtung und Schedulingsystem noch einmal detaillierter dargestellt.

Batchjobs A-E, die von dem Scheduler-System geplant werden müssen, haben zahlreiche Abhängigkeiten, wie durch die Graphstruktur in der Figur angedeutet ist. Eine solche Abhängigkeit kann intern sein, weil etwa Batchjob B auf ein Rechenergebnis von Batchjob A angewiesen ist oder Batchjob C eine für Batchjob E wichtige Datei generiert. Es kann sich aber auch schlicht um eine zwingende zeitliche Abfolge handeln, weil etwa eine Rezeptur vorgibt, in welcher Reihenfolge Zutaten zu bearbeiten sind.

Die Testvorrichtung 1 ist nun vorteilhafterweise dafür ausgebildet, solche Abhängigkeiten insbesondere in Bezug auf Dateien zu überprüfen. Dazu wird die abgefragte Jobliste, die vom Schedulingsystem herkömmlich in einer beliebigen Reihenfolge zurückgegeben wird, zunächst in einem Sortierer 9 zeitlich sortiert und diese Jobliste dann in einem Joblisten-Speicher 10 abgelegt. Eine eigentliche Check-Einrichtung 11 merkt sich nun für jeden simulierten Job, welche Dateien berührt werden, also angelegt, gelöscht, gelesen oder verändert. Über diese Dateien mit ihrem jeweiligen Status führt der Checker 11 in einem angeschlossenen Dateikatalog-Speicher 12 Buch. Somit ist er in der Lage, bei einem Jobaufruf zu erkennen, ob die von dem Job erwartete Dateistruktur überhaupt vorhanden ist, und er gibt eine Warnung aus, wenn etwa ein Job aus einer nicht vorhandenen Datei lesen möchte oder ein anderer Job eine Datei anlegt, die bereits existiert. Das erhöht die Wirksamkeit der Überprüfung erheblich, da solche Fehler die gesamte Abhängigkeitskette der Batchjobs beeinträchtigen können. So würde ein fehlerhaftes Löschen einer Datei X durch den Batchjob A in Fig. 2 zu Fehlern in Batchjobs B, D und E führen, wenn eine der Aufgaben von Batchjob B ist, die vorhandene Datei X für Batchjobs D und E aufzubereiten. Dies scheitert, weil die Datei X gar nicht existiert.

Die Erfindung soll nun anhand des besonders wichtigen IBM-Mainframe-Systems noch einmal detailliert beschrieben werden. Dies ist allerdings erläuternd und nicht einschränkend zu verstehen, da die soeben beschriebene Erfindung von der Rechnerumgebung nicht abhängt. Ebenso wird als Job-Checker beispielhaft das Produkt SmartJCL von HORIZONT verwendet, obwohl die Erfindung auch mit anderen Job-Checkern genutzt werden kann.

Während der Installation von SmartJCL werden alle relevanten Angaben über den Typ des Schedulingsystems, Versionsnummer des Schedulingsystems, Systemumgebung des Schedulingsystems sowie zum Beispiel Dateinamen und ähnliches abgefragt und SmartJCL-intern gespeichert.

Zur Massensimulation baut SmartJCL eine eigene temporäre Schedulingsystem-Umgebung auf, indem sämtliche für das temporäre Schedulingsystem notwendigen Dateien mit eigenen Dateinamen angelegt werden.

Anschließend werden die Definitionsdateien des produktiven Schedulingsystems in das temporäre Schedulingsystem kopiert. Zusätzlich werden einige Parameter der Parameterdateien des produktiven Schedulingsystems in das temporäre Schedulingsystem kopiert. Andere Parameter werden mit festen Werten im temporären Schedulingsystem gesetzt.

Dann wird das des temporäre Schedulingsystem von SmartJCL gestartet. Wenige Sekunden nach dem Systemstart steht das temporäre Schedulingsystem als eigenes Subsystem zur Verfügung.

Anschließend werden mit den eigenen Abläufen des Schedulingsystems, welche SmartJCL dynamisch generiert, aus den Definitionsdateien des temporären Schedulingsystems die Tagesplandateien für das temporäre Schedulingsystem in einem definierten Zeitpunkt erzeugt. Nun weiß das des temporäre Schedulingsystem, welche Jobs zu welchem Zeitpunkt ausgeführt werden sollen.

SmartJCL liest die Tagesplandatei des temporären Schedulingsystems aus und erhält eine Liste aller relevanten Jobs u.a. mit der Angabe des geplanten Startzeitpunkts. Im Folgenden wird mit jedem Job der Liste simuliert. SmartJCL greift dabei auf die interne Simulationsfunktion des Schedulingsystems TWS z/OS zu und bekommt die simulierte JCL zurück.

Da mit dem temporären Schedulingsystem keine Produktion gefahren wird, werden dadurch also keine Anwender und kein produktives Schedulingsystem negativ beeinträchtigt. Der durch das temporäre Schedulingsystem geringfügig erhöhte Systemverbrauch auf der gleichen Hardware spielt keine wesentliche Rolle für die Gesamtperformance.

Anschließend kann die simulierte JCL geprüft werden und der JCL-Checker seine normalen Dienste durchführen.

Existieren mehrere produktive Hardware- bzw. Schedulingumgebungen, so kann optional nach den einzelnen Umgebungen gruppiert und für jede Umgebung einzeln simuliert und geprüft werden. Dies geschieht über entsprechende Selektionsparameter.

In vorteilhafter Weiterbildung der Erfindung wird zusätzlich die geplante Startreihenfolge der Jobs über eine Catalog-Funktion geprüft, welche Buch über Dateien führt. Der Job-Checker kann also die Dateiverarbeitung (Datenfluß) über viele Jobs simulieren und prüfen.

Hierzu Codeschnipsel zweier Jobs JOB1 und JOB2, wobei JOB1 eine mit Erstellungsdatum 28. Februar 2005 im Dateinamen codierte Datei erzeugt, die von JOB2 gelesen wird:

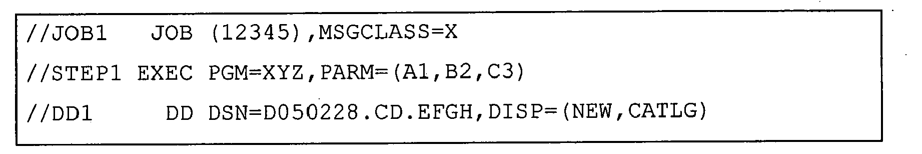

JOB1 erstellt durch die Angabe von DISP=(NEW,CATLG) die Datei D050228.CD.EFGH.

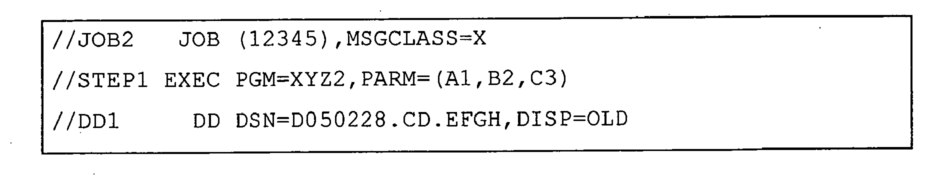

JOB2 liest diese Datei durch die Angabe von DISP=OLD. Im Normalfall sollte deshalb JOB1 vor JOB2 ablaufen. Die Catalog-Funktion führt Buch über das Schicksal der Datei D050228.CD.EFGH, dass sie also von JOB1 erzeugt und von JOB2 gelesen wird.

Wenn die Datei z.B. beim Start von JOB1 schon existiert, würde der Job mit einer Fehlermeldung enden. Ebenso würde JOB2 abbrechen, wenn die Datei nicht existiert. Deshalb ist eine vorteilhafte weitere Funktion von SmartJCL, auch die Dateiverarbeitung bzw. -verwaltung zu simulieren und derartige mögliche Fehlerquellen aufzuzeigen.

Dazu werden die Jobs des Tagesplans nach der zu erwartenden Jobablaufreihenfolge sortiert. Hierzu kann sowohl die geplante Jobstartzeit der Jobliste verwendet werden, als auch die Abhängigkeiten zwischen den Jobs aus der Datendefinitionsdatei oder diejenigen des Tagesplans.

Die Jobs werden nun genau in der Reihenfolge der zu erwartenden Jobablaufreihenfolge simuliert. Vor der Simulation des ersten Jobs wird darüber hinaus die Liste aller Dateien aus dem Systemkatalog gelesen, d.h. SmartJCL baut sich über die Catalog-Funktion eine interne Liste mit allen Dateien des Systems auf.

SmartJCL simuliert also die Dateiverarbeitung, indem geprüft wird, ob die die zu lesende/verarbeitende Datei zum gewünschten Zeitpunkt existiert, oder ob eine Datei zum gewünschten Zeitpunkt angelegt werden kann (die Datei darf dafür also nicht bereits existieren.) Dateien, welche in den Jobs gelöscht und/oder neu angelegt werden, werden von SmartJCL in der internen Dateiliste entsprechend nachverarbeitet.

Abschließend soll noch einmal darauf hingewiesen werden, dass vorstehend zwar immer wieder Bezug auf SmartJCL als einem speziellen JCL-Checker genommen wird, die Erfindung aber ebenso im Zusammenhang mit anderen Checkern implementiert werden kann.

## Patentansprüche

1. Testvorrichtung (1, 7, 8) zur Überprüfung einer Stapelverarbeitung in einer Datenverarbeitungsanlage (2) mit einer ersten Scheduling-Einrichtung (3) zur Steuerung der Stapelverarbeitung, wobei die erste Scheduling-Einrichtung (3) dafür ausgebildet ist, über eine erste Skriptschnittstelle (4) Skripte aus einer Skriptbibliothek (5) auszuführen, um somit Arbeitsvorgänge nachgeordneter Einrichtungen eines Betriebes auszuführen oder zu steuern,
**gekennzeichnet durch**
eine zweite Scheduling-Einrichtung (7), die dafür ausgebildet ist, über eine von der ersten Skriptschnittstelle (3) unabhängige zweite Skriptschnittstelle (8) die Ausführung von Skripten aus der Skriptbibliothek (5) zu simulieren und Ergebnisdaten der Simulation an eine Auswertungseinheit (1) der Testvorrichtung (1, 7, 8) zurückzugeben.

2. Testvorrichtung (1, 7, 8) nach Anspruch 1,
wobei die zweite Scheduling-Einrichtung (7) mit ihrer zweiten Skriptschnittstelle (8) Teil der Datenverarbeitungsanlage (2) ist.

3. Testvorrichtung (1, 7, 8) nach Anspruch 1 oder 2,
wobei die zweite Scheduling-Einrichtung (7) eine zweite Instanz der ersten Scheduling-Einrichtung (3) ist und Definitionsdateien der ersten Scheduling-Einrichtung (3) für die zweite Scheduling-Einrichtung (7) kopiert sind.

4. Testvorrichtung (1, 7, 8) nach Anspruch 3,
wobei die zweite Scheduling-Einrichtung (7) eine temporäre Schedulingsystem-Umgebung aufweist, welche die kopierten Definitionsdateien sowie weitere Parameter umfasst, und wobei eine Steuereinheit (1) der Testvorrichtung (1, 7, 8) dafür ausgebildet ist, die zweite Scheduling-Einrichtung (7) mit ihrer Schedulingsystem-Umgebung zu Beginn einer Simulation auf- und nach deren Beendigung wieder abzubauen.

5. Testvorrichtung (1, 7, 8) nach einem der Ansprüche 1 bis 4,
wobei die Datenverarbeitungsanlage (2) ein IBM-Mainframerechner, die erste (3) und zweite Scheduling-Einrichtung (7) ein TWS-System und die Steuersprache für die Stapelverarbeitung JCL ist.

6. Testvorrichtung (1, 7, 8) nach Anspruch 5,
wobei für die zweite Scheduling-Einrichtung (7) ein Eintrag in einer Subsystemtabelle des Betriebssystems des IBM-Mainframerechners (2) vorgenommen ist.

7. Testvorrichtung (1, 7, 8) nach einem der Ansprüche 1 bis 6,
wobei eine Sortiereinrichtung (9) vorgesehen ist, die dafür ausgebildet ist, zu Beginn der Simulation eine Liste aller auszuführender Arbeitsvorgänge der Stapelverarbeitung zu empfangen und nach ihrer Ausführungszeit zu sortieren.

8. Testvorrichtung (1, 7, 8) nach einem der Ansprüche 1 bis 7,
wobei die Testvorrichtung (1) eine Liste aller durch Arbeitsvorgänge der Stapelverarbeitung angelegten, gelöschten, geänderten oder gelesenen Dateien hält.

9. Testvorrichtung (1, 7, 8) nach Anspruch 7 und 8,
wobei eine Prüfeinrichtung (11) vorgesehen ist, welche dafür ausgelegt ist, für diejenigen Arbeitsvorgänge, die einen Dateizugriff vorsehen, zu überprüfen, ob eine gemäß der per Sortierung ermittelten Ausführungsreihenfolge anzulegende Datei bereits angelegt oder eine benötigte Datei nicht vorhanden ist, und zutreffendenfalls einen Warnhinweis auszugeben.

10. Testverfahren zur Überprüfung einer Stapelverarbeitung in einer Datenverarbeitungsanlage (2) mit einer ersten Scheduling-Einrichtung (3) zur Steuerung der Stapelverarbeitung, wobei die erste Scheduling-Einrichtung (3) über eine erste Skriptschnittstelle (4) Skripte aus einer Skriptbibliothek (5) ausführen kann, um somit Arbeitsvorgänge nachgeordneter Einrichtungen eines Betriebes auszuführen oder zu steuern,
**dadurch gekennzeichnet, dass**
eine zweite Scheduling-Einrichtung (7) über eine von der ersten Skriptschnittstelle (4) unabhängige zweite Skriptschnittstelle (8) die Ausführung von Skripten aus der Skriptbibliothek (5) simuliert und Ergebnisdaten der Simulation zur weiteren Auswertung zur Verfügung stellt.

11. Testverfahren nach Anspruch 10,
wobei das gesamte Testverfahren auf derselben Datenverarbeitungsanlage (2) abläuft.

12. Testverfahren nach Anspruch 10 oder 11,
wobei die zweite Scheduling-Einrichtung (7) eine zweite Instanz der ersten Scheduling-Einrichtung (3) ist und Definitionsdateien der ersten Scheduling-Einrichtung (3) für die zweite Scheduling-Einrichtung (7) kopiert werden.

13. Testverfahren nach Anspruch 12,
wobei für die zweite Scheduling-Einrichtung (7) eine temporäre Schedulingsystem-Umgebung angelegt wird, welche die Definitionsdateien sowie weitere Parameter umfasst, und wobei die zweite Scheduling-Einrichtung (7) mit ihrer Schedulingsystem-Umgebung zu Beginn einer Simulation auf- und nach deren Beendigung wieder abgebaut wird.

14. Testverfahren nach einem der Ansprüche 10 bis 13,
wobei die Datenverarbeitungsanlage (2) ein IBM-Mainframerechner, die erste (3) und zweite Scheduling-Einrichtung (7) ein TWS-System und die Steuersprache für die Stapelverarbeitung JCL ist.

15. Testverfahren nach Anspruch 14,
wobei für die zweite Scheduling-Einrichtung (7) ein Eintrag in einer Subsystemtabelle des Betriebssystems des IBM-Mainframerechners (2) vorgenommen wird.

16. Testverfahren nach einem der Ansprüche 10 bis 15,
wobei zu Beginn der Simulation eine Liste aller auszuführender Arbeitsvorgänge der Stapelverarbeitung empfangen und nach ihrer Ausführungszeit sortiert wird.

17. Testverfahren nach einem der Ansprüche 10 bis 16,
wobei eine Liste aller durch Arbeitsvorgänge der Stapelverarbeitung angelegten, gelöschten, geänderten oder gelesenen Dateien geführt wird.

18. Testverfahren nach Anspruch 16 und 17,
wobei für diejenigen Arbeitsvorgänge, die einen Dateizugriff vorsehen, überprüft wird, ob eine gemäß der per Sortierung ermittelten Ausführungsreihenfolge anzulegende Datei bereits angelegt oder eine benötigte Datei nicht vorhanden ist, und wobei zutreffendenfalls ein Warnhinweis ausgegeben wird.
